# EUROPEAN PATENT SPECIFICATION

(11) **EP 2 801 413 B1**
(45) Date of publication and mention of the grant of the patent: **05.12.2018**
(21) Application number: 14172663.8
(22) Date of filing: 05.05.2011
(51) Int. Cl.: A01C 7/02, B05B 7/24, B05B 7/12, B05B 1/30, A01M 7/00, A01C 15/02, A01C 15/04, B05B 12/00

(54) **Blower/atomizer portable device**
Tragbare Gebläse-/Zerstäubungsvorrichtung
Dispositif portable de soufflante/atomiseur

(43) Date of publication of application: 12.11.2014
(62) Divisional of application: 11727315.1
(73) Proprietor: Cifarelli S.p.A., 27058 Voghera (Pavia) (IT)
(72) Inventor: Cifarelli, Roberto, 27058 Voghera (PAVIA) (IT)
(74) Representative: Tarabbia, Luigi

(56) References cited:
- EP-A1- 1 886 613
- WO-A1-2004/072383
- US-A- 5 190 225

## Description

The present invention relates to a portable agricultural device of the blower/atomizer type, usable for spreading agrotechnical substances (fertilisers, pesticides, seeds, corn and others).

It is known that blowers/atomizers generally used in agriculture are formed on the base of a framework carried on the shoulder/the back, on which a mechanical power generator (usually an internal combustion engine) is mainly placed, which power generator is connected to a flow-generating fan; the fan directs this flow to a flexible swingable pipeline into which the substance to be spread/atomized is introduced.

The substance to be spread/atomized is contained in a suitable tank, usually placed in the uppermost part of the device and is introduced into the swingable pipeline or tube at a point placed in the vicinity of an outlet orifice; the operating performances of the whole device (number of revolutions of the engine, air flowrate, amount of the substance to be mixed and others) are finally adjusted by the operator through suitable control means.

While these types of devices are widely utilised, they have some drawbacks.

First of all the traditional modes of mixing the substance to be spread with the air flow contemplate the presence, in the swingable tube, of a "joint" the task of which is to adjust and mix the substance to be spread/atomized, introducing it into the air flow; this joint generally takes up a great part of the tube section therefore giving rise to turbulence and flow resistance in the flexible tube (compensation of these forces requiring a greater engine power which is therefore more expensive and at all events more demanding from the point of view of energy).

In addition, as it is necessary to intervene separately on the number of "engine revolutions" of the propulsion assembly and on the remaining operating parameters (mainly the flowrate resulting from the air or substance amount to be introduced and mixed into the air flow generated by the fan), the presence of a multiplicity of separated user controls is required, which will unavoidably give rise to an increase in the production costs and correlated reduction in the ergonomic features and user-friendliness.

It is also to be pointed out that generally the mechanical connection between propulsion assembly and pumping unit designed to cause movement of the substances to be introduced into the flow relies on mechanical couplings that therefore constitute a possible point of penetration for undesirable environmental elements such as dust and polluting agents; these foreign elements, on the one hand, can contaminate the air flow generated by the fan and, on the other hand, can erode and penetrate the propulsion assembly, causing reduced efficiency or failures/lockout of the propulsion assembly itself

One example of a blower atomizer is the device presented in application EP 1886613. A control valve is arranged in the spraying agent line. A throttle control acts on the internal combustion engine, and an actuating element acts on the control valve.
Both said throttle control and actuating element are provided on an handle.

In the light of the above, the present invention aims at conceiving and making available a blower/atomizer device capable of solving the aforesaid drawbacks.

In particular, it is an aim of the present invention to conceive an atomizer envisaged and produced for ensuring high efficiency in terms of spreading, adjustment and mixing, optimising the features of the air flow and dispersion of the substance to be spread inside the flow itself.

Another aim of the invention is to implement better ergonomic features and easier use of a portable atomizer.

Finally, the present invention aims at greatly improving reliability and the functional couplings of the atomizer components, thus obtaining better and longer operating lifetime.

The foregoing and further aims are achieved by the blower/atomizer according to the present invention, described hereinafter in an exemplary form thereof and claimed in the following, being illustrated in the accompanying drawings, in which:
- Fig. 1 is a longitudinal section view of a first functional assembly of the device of the invention;
- Fig. 2 is a longitudinal section view of the functional assembly in Fig. 1 taken along a plane at 90° relative to the section plane in Fig. 1;
- Fig. 3 is a cross-sectional view of the functional assembly in Fig. 1 taken along line III-III;
- Fig. 4 is a front view of the functional assembly in Fig. 1;

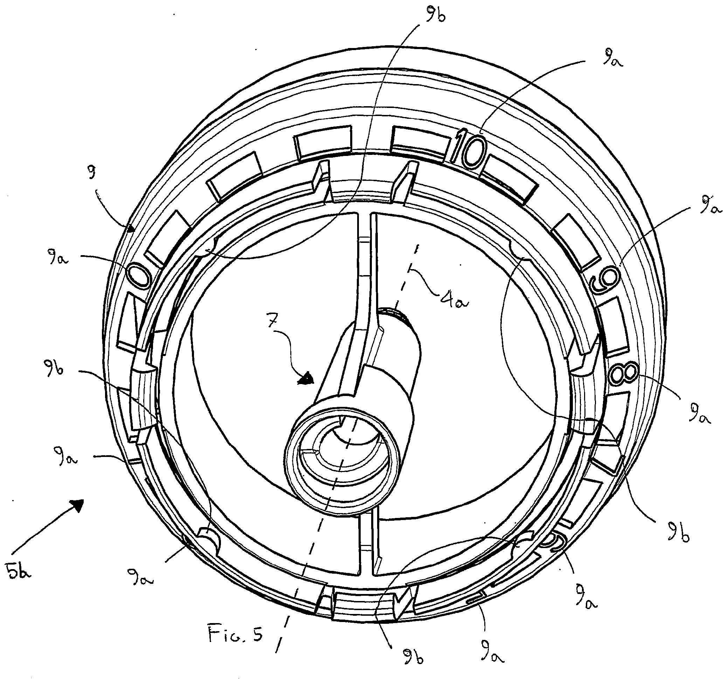

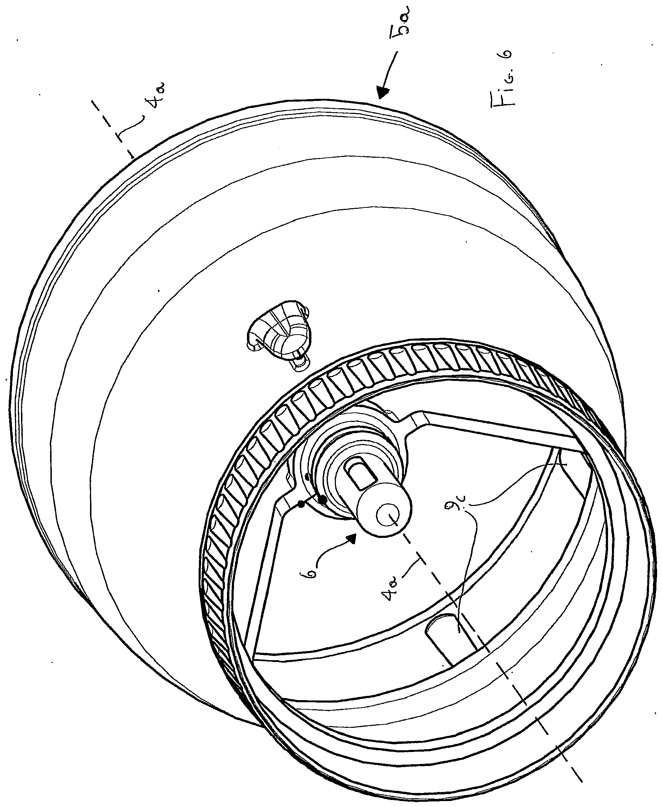

- Figs. 5 and 6 show respective perspective views of two components of the functional assembly of Fig. 1;

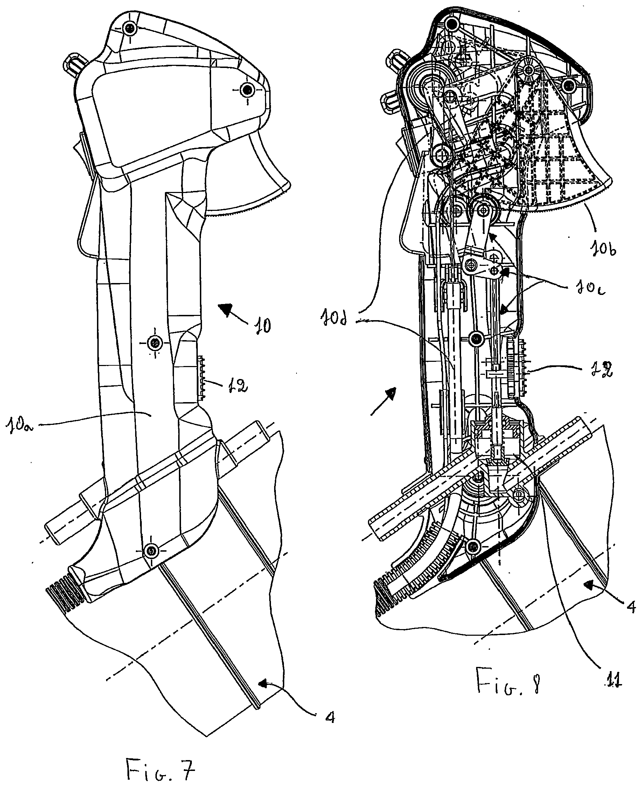

- Fig. 7 is a side view of a second functional assembly of the device of the invention;
- Fig. 8 is a sectional view of the second functional assembly seen in Fig. 7; and

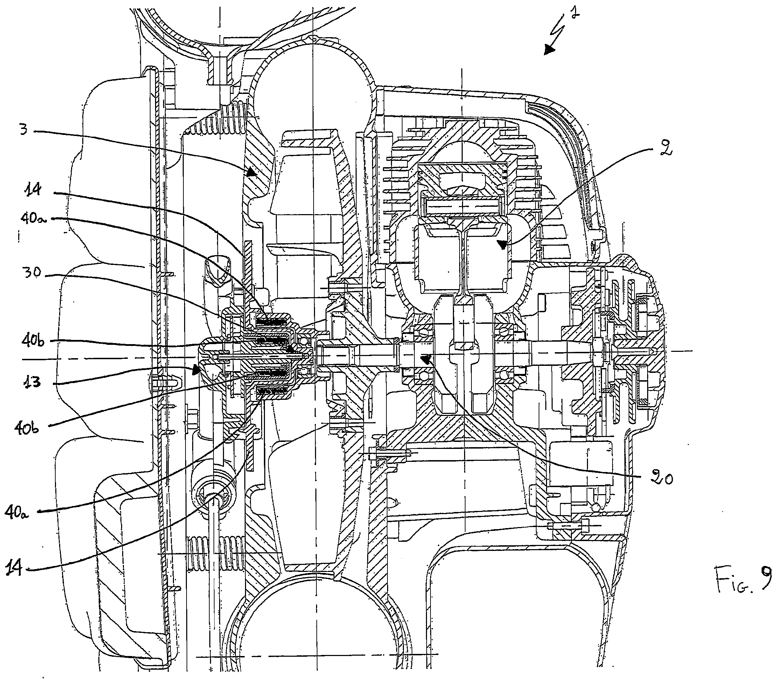

- Fig. 9 is a sectional view of the device according to the invention, in which the structural relationship between other functional assemblies or units of the device itself is highlighted.

With reference to the above, the blower/atomizer device is generally denoted by reference numeral 1 (in the drawings) and substantially comprises the following functional base components:
- a propulsion assembly or power unit 2, adapted to generate a mechanical power (which in turn is employed for operating the other functional assemblies or units listed herebelow);
- a blowing assembly 3 connected to the propulsion assembly 2 and adapted to energise and convey an air flow (through a fan enclosed in a suitable inner compartment, for example);
- a flexible swingable dispenser 4 (to be obtained using a flexible and/or articulated pipeline or tube, for example) defining a median axis 4a and adapted to emit and direct a flow that in turn is set in motion by the blowing assembly 3 along said median axis 4a; and
- an adjusting assembly 5 operatively acting in the flexible dispenser 4 for selectively introducing a predetermined amount of substance "S" to be distributed/atomized into the aforesaid flow,
the present device also optionally including a pumping unit 13 to be described in greater detail in the following, for better functional integration and operating flexibility.

According to a first advantageous feature of the present invention, the adjusting assembly 5 is coaxially mounted to the flexible dispenser 4 and comprises an inserting member 5a to be selectively configured according to a multiplicity of dispensing conditions by corresponding rotations of the inserting member 5a itself around the median axis 4a.

The described (and hereinafter claimed) structure has many differences as compared with the adjusting assemblies of known type that generally, as seen, "enter" the flexible tube "perpendicularly" by means of adjusting mechanisms disposed at right angles to the median axis 4a (which mechanisms consequently involve great bulkiness in section and represent an important source of turbulence/flow resistance); unlike the devices of known type, the mechanism of the present invention has a great compactness as regards the taken-up cross-section of the swingable tube and is of very simple construction.

In more detail, it is possible to see that the adjusting assembly 5 further comprises a control element 5b which is externally fitted (in coaxial manner, for example) to the swingable dispenser 4; this control element 5b can rotate around the median axis 4a so as to determine a plurality of flowrates of the substance "S" introduced into the flow.

Substance "S" introduced into the swingable tube comes from a holding tank; to this aim, device 1 further comprises conveying means 4c (slender pipelines, preferably flexible or articulated, for example) adapted to connect said holding tank to the inserting member 5a. Always for the purpose of minimising the space taken up in the cross section of the swingable dispenser/tube, the conveying means 4c extends in the axial direction in the swingable dispenser 4 at least in the vicinity of the inserting member 5a so that said means will be in alignment with the flow as much as possible thereby minimising their contribution in creating turbulence or flow resistance.

Still for the purpose of maximising compactness and giving the greatest functional character to the invention, the inserting member 5a and control element 5b are mutually connected in a coaxial manner along the median axis 4a at least through a first engagement portion 6 and a second engagement portion 7; these two engagement portions at least partly penetrate into each other and in cooperation define an adjusting channel 8 (that is clearly connected without a break to the swingable dispenser, at least in terms of flow passage), extending parallel to/in coaxial relationship with the median axis 4a.

From the geometric point of view, the adjusting channel 8 comprises an inlet end 8a (connected to the holding tank or more generally adapted to receive the aforesaid conveying means), an inserting end 8b opposite to the inlet end 8a and opening into the swingable dispenser 4, and finally an adjustable central section/portion 8c included between the inlet end 8a and inserting end 8b.

With reference to the above described geometry, it should be noted that the engagement portions 6 and 7 can rotate relative to each other and comprise section-varying means for varying a passage cross-section of the adjusting channel 8; this section-varying means is integrally formed in the first and/or the second engagement portions and is also adapted to vary a passage port in the adjustable central section 8c.

Conveniently, variation in the passage port can be such accomplished that it is proportional to the multiplicity of dispensing conditions (and consequently having different adjustment/mixing degrees for substance "S").

In other words and with reference to a possible embodiment of the present invention, the section-varying means for varying the passage cross-section comprises a passage port formed in the first engagement portion 6 (as shown in the drawings), which passage port is adapted to connect the inlet end 8a to the second engagement portion 7.

A necking-down element is present and is in functional cooperation with the aforesaid passage port; it is placed internally of the second engagement portion 7 and is also brought into fluid communication with said passage port 8d.

The necking-down element, due to a suitable geometric configuration (in the drawings it is in the form of an inclined helical surface extending coaxially with the adjusting channel 8, for example), is adapted to define said cross-section variation of the adjustable central portion 8c, by virtue of the relative rotations between the engagement portions 6 and 7 causing a change in the overall passage surface and/or the inner volumes of the adjustable central portion/section of the adjusting channel 8 itself.

To enable the user/operator to accurately quantify the mixture formed by substance "S" with the flow in the swingable tube, measuring and selecting means 9 can be present; said means is designed to determine variable intermediate flowrates between a minimum (or zero) flowrate and a maximum flowrate of substance "S".

The measuring and selecting means 9 is formed externally of the inserting member 5a or on the control element 5b and is adapted to determine a plurality of predetermined relative rotations between the inserting member 5a and the control element 5b; this plurality of predetermined relative rotations will correspond, depending on the related rotation angle, to predetermined adjustment percentages between the flow and substance "S".

From the structural point of view, the measuring and selecting means 9 shown in the figures first of all comprises:
- a perimetral ring nut 9a which is integrally formed on an outer face of the inserting member 5a (but alternatively, it can be formed on an outer face of the control element 5b) and has a circumferential numerical reference scale;
- a plurality of snap bodies 9b positioned in correlation with numerical values (generally discrete values) of the numerical reference scale; and
- a plurality of fitting seats 9c positioned in the control element 5b (or alternatively in the inserting member 5a) and adapted to receive at least one of the snap bodies 9b in reversible engagement.

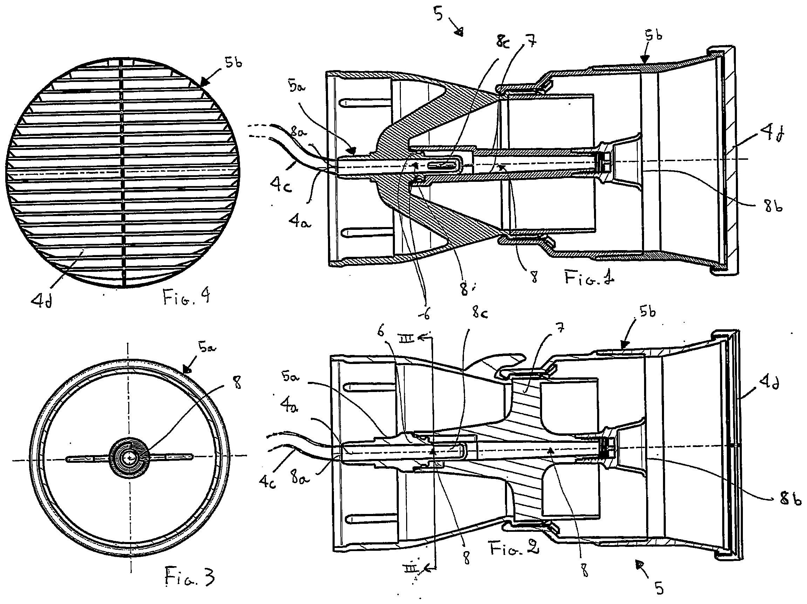

Due to the aforesaid components, the user/operator of the device of the invention is able to determine different adjusting condition for introduction of substance "S" into the flow; this determination takes place very quickly, in a precise manner and without imposing long and strong turbulence transients to the outgoing flow and, above all, it takes place by directly acting manually on outer surfaces/faces of the device according to the invention.
Conveniently, the position of the adjusting assembly 5 relative to the swingable dispenser 4 can be selected in such a manner as to maximise the ergonomic feature or minimise the flow-perturbation effect; for instance, the adjusting assembly 5 can be positioned at a final (or "distal") end of the swingable dispenser 4. Also note that element 5b can be equipped with suitable flow subdivision means placed at an outlet orifice thereof, such as the slit-like opening 4d visible in Figs. 1, 2 and 4.

According to the present invention (that can possibly be found in blower/atomizer devices not necessarily provided with the above described mixing means), device 1 further comprises synchronised actuating means 10 simultaneously acting on:
- the swingable dispenser 4 so as to vary a flowrate thereof; and
- the propulsion assembly 2 so as to vary delivery of mechanical power.
In fact, while in known devices the two above listed operating parameters are operated by respective separated user interfaces, in this invention a single control means is efficiently and originally provided, which control means can ensure halving of the control operations required from the user/operator and simultaneously a perfect agreement of the functional parameters with the different possible use conditions.

Conveniently, the synchronised actuating means 10 comprises a handgrip or handle 10a to be grasped by a user/operator; this handle 10a can be connected to the swingable dispenser 4 and in turn comprises an actuating slider 10b (e.g. a trigger to be pressed and movable between an operating-minimum condition and a maximum use condition), a first kinematic actuating mechanism 10c operatively connected to the actuating slider 10b and a second kinematic actuating mechanism 10d operatively connected to the actuating slider 10b.

Also present is flow adjusting means, which is interlocked with the first kinematic actuating mechanism 10c (and for example comprises a valve element 11 adapted to adjust the pressure and/or flowrate linked to the corresponding values of the flow itself), while provision is made for adjusting means for the propulsion assembly 2, which means is in functional coordination with (but substantially in direct structural independence of) said flow adjusting means, being on the contrary interlocked with the second kinematic actuating mechanism 10d (for instance, the adjusting means for the propulsion assembly or power unit 2 comprises an element adapted to adjust a rotation speed of said assembly 2).

Due to the presence of the synchronised actuating means, the present invention also reaches an important operative-safety factor; in fact, should a loss of grip or direct manual control/contact between operator and handle, release of the "control trigger" involves simultaneous closure both of the control means regulating power of the propulsion assembly and the control means regulating introduction of the flow; therefore operation of device 1 stops in a spontaneous and very quick manner, thus preventing the substances from being spread in an undesirable manner.

In order to enable the most accurate adjustments to be carried out under particular operating conditions, an additional control device 12 can be present which is adapted to adjust at least one minimum-flowrate condition of the flow; with reference to the drawings, this additional control device is operatively connected to the first kinematic actuating mechanism 10c alone and preferably comprises an adjustable element consisting of a disc or a wheel adapted to determine a plurality of configurations of the flow adjusting means (for instance different rotations of the wheel shown in the figures correspond to different "idling" positions of the slider of the underlying adjusting valve, so that different minimum-flowrate conditions are determined).

Still in terms of innovative and original features of the present invention (that can be put into practice on blowers/atomizers that can also be devoid of the above described features), the present device can be advantageously provided (if a pumping unit 13 is present which is driven by the power unit 2 and is adapted to cause movement of a substance to be atomized) with contactless transmission means acting between the power unit 2, blowing assembly 3 and pumping unit 13.

The aforesaid contactless transmission means is therefore adapted to actuate at least the pumping unit 13 maintaining a pneumatic and/or hydraulic separation relative to the propulsion assembly 2 and/or the blowing assembly 3, so that entry of corrosive or wear-causing substances is avoided in that part of the device that specifically has not to energise and convey the substances to be atomized/spread (or also in order to avoid transfers in the opposite direction, for example of gases resulting from combustion in the power unit or of various lubricants/mechanical additives).

From a structural point of view, the contactless transmission means can operate on/between an output shaft 20 (operatively connected to the propulsive assembly 2, for instance connected to a crank and connecting rod system of a reciprocating engine) and a fitting shaft 30 (operatively connected to at least the pumping unit 13).

In greater detail, the output shaft 20 has a first end emerging from the propulsion assembly 2 (and turned towards the blowing assembly 3), while the fitting shaft 30 has a second end facing the aforesaid first end of the output shaft; advantageously, the contactless transmission means comprises a magnetic driving element 40a mounted on the first end of the output shaft 20 and a corresponding magnetic driven element 40b mounted on the second end of the fitting shaft 30.

The two magnetic elements "face" each other so as to create a magnetic attraction at least in a rotation direction of the output shaft 20 under operating conditions.

According to a possible embodiment of the present invention, the magnetic driving element 40a and the magnetic driven element 40b have a toroidal conformation and are disposed in mutual coaxial and concentric relationship; in this manner it is possible to maximise the compactness and axial symmetry of the transmission coupling that is defined by the contactless transmission means.

For carrying out the necessary separation/tightness between the different operating volumes, also present is volumetric isolation means interposed at least between the pumping unit 13 and the propulsion assembly 2 (or also interposed, depending on particular requirements, between the blowing assembly 3 and the aforesaid two other functional assemblies) at least at the first end of the output shaft 20 and the second end of the fitting shaft 30; this volumetric isolation means for instance comprises a fastening and separation plate placed between the pumping unit 13 and an inner compartment for housing a fan (belonging, as already said, to the blowing assembly 3, and adapted to be advantageously rigidly mounted to the output shaft 20).

Due to the particular functional character of the contactless transmission means described above (and hereinafter claimed) it is further possible to provide the present invention with a another innovative and original operability: actually, the presence of friction coupling means operatively interposed between the pumping unit 13 and propulsion assembly 2 can be implemented; this friction coupling means can advantageously comprise and even be coincident with the magnetic driving means 40a and the magnetic driven means 40b.

From the operating point of view, the lack of contact and the magnetic driving effect can allow, on arising of particular conditions (e.g. an anomaly due to clogging/seizing of the pumping unit 13), "dissipation" of the torsional strength that is created, for overcoming the magnetic attraction, so that this force is not discharged on the output shaft or the fitting shaft and consequently no dangerous effects occur on the device parts that have not been directly submitted to arising of the anomaly.

The invention achieves the intended aims.

First of all, the particular construction architecture of the adjusting portion allows an air flow with minimum disturbance to be obtained as well as an accurate and quick introduction of the substance "S", without obstructions or requirement of adjusting members of great bulkiness; this also results in an improved manoeuvring of the swingable tube that is made lighter in its end portion and is also simplified in terms of inner and outer bulkiness.

In addition, integration of the control means for the number of revolutions of the engine and for adjustment of the air flowrate enables a very precise and easily adjustable synchronism and proportionality to be established through a single user interface; this advantageously affects ease of use and operator's comfort.

Furthermore, in the present invention the particular interconnecting mode between the engine shaft and the fan hub ensures the possibility of transferring motion while maintaining an almost complete isolation in terms of infiltration of gas, liquid or foreign substances both into the power unit compartment and the fan housing compartment, which is advantageous for maintaining the best operating conditions.

It is finally to be pointed out that the present invention offers important improvements within the considered technical system, without involving unfavourable increases in costs or production complexity.

## Claims

1. A blower/atomizer device, preferably of the portable type, comprising:
- a propulsion assembly or power unit (2), adapted to generate a mechanical power;
- a blowing assembly (3) connected to said propulsion assembly (2) and adapted to energise and convey an air flow
- a flexible swingable dispenser (4) defining a median axis (4a) and adapted to emit and direct a flow set in motion by the blowing assembly (3) along said median axis (4a); and
- an adjusting assembly (5) operatively acting in said swingable dispenser (4) for selectively introducing a predetermined amount of substance "S" to be distributed/atomized, into said flow,
said device further comprising synchronised actuating means (10) simultaneously acting on the swingable dispenser (4) so as to vary a flowrate in said swingable dispenser (4) resulting from the air or substance amount to be introduced and mixed into the air flow generated by said blowing assembly (3), and the propulsion assembly (2) so as to vary delivery of mechanical power;
wherein said synchronised actuating means (10) comprises a handgrip or handle (10a) to be grasped by a user/operator, said handle (10a) being connected to the swingable dispenser (4), **characterized by** including:
- at least one actuating slider (10b) movable between an operating-minimum condition and a maximum use condition;
- a first kinematic actuating mechanism (10c) operatively connected to said actuating slider (10b);
- flow adjusting means interlocked with said first kinematic actuating mechanism (10c), said flow adjusting means including a valve element (11) adapted to adjust a pressure and/or a flowrate;
- a second kinematic actuating mechanism (10d) operatively connected to said actuating slider (10b);
- means for adjusting the propulsion assembly (2) interlocked with said second kinematic actuating mechanism (10d), said means for adjusting the propulsion assembly (2) comprising an element adapted to adjust a rotation speed of the propulsion assembly (2), said means for adjusting the propulsion assembly (2) being in functional coordination with and substantially in direct structural independence of said flow adjusting means.

2. A device as claimed in claim 1, wherein also present is an additional control device (12) adapted to adjust at least one minimum-flowrate condition of the flow, said additional control device (12) being operatively connected to the first kinematic actuating element (10c) alone and preferably comprising an adjustable element consisting of a disc or a wheel adapted to determine a plurality of configurations of the flow adjusting means.

## Patentansprüche

1. Gebläse-/Zerstäubungsvorrichtung, vorzugsweise vom tragbaren Typ, umfassend:
- eine Antriebsanordnung oder Antriebseinheit (2), die ausgelegt ist, um eine mechanische Kraft zu erzeugen;
- eine Gebläseanordnung (3), die mit der Antriebsanordnung (2) verbunden und ausgelegt ist, um einem Luftstrom Energie zuzuführen und diesen zu fördern;
- eine flexible schwingbare Ausgabe (4), definierend eine mittlere Achse (4a) und ausgelegt, um einen Strom auszugeben und zu lenken, in Bewegung versetzt von der Gebläseanordnung (3) entlang der mittleren Achse (4a), und
- eine Einstellanordnung (5), die betriebswirksam auf die schwingbare Ausgabe (4) wirkt, um selektiv eine vorgegebene Menge einer zu verteilenden/zerstäubenden Substanz "S" in den Strom einzuführen,
wobei diese Vorrichtung zudem synchronisierte Betätigungsmittel (10) umfasst, die simultan auf die schwingbare Ausgabe (4) wirken, sodass eine Durchflussmenge in der schwingbaren Ausgabe (4) variiert wird, sich ergebend aus der einzuführenden und im von der Gebläseanordnung (3) erzeugten Luftstrom gemischten Luft- oder Substanzmenge, und auf die Antriebsanordnung (2), sodass die Zuführung von mechanischer Kraft variiert wird,
wobei die synchronisierten Betätigungsmittel (10) einen Handgriff oder Haltegriff (10a) umfassen, der von einem Nutzer/Bediener zu greifen ist, wobei der Handgriff (10a) mit der schwingbaren Ausgabe (4) verbunden ist, **dadurch gekennzeichnet, dass** sie umfasst:
- mindestens einen Betätigungsschieber (10b), der zwischen einem Betriebsmindestzustand und einem maximalen Nutzungszustand bewegbar ist;
- einen ersten kinematischen Betätigungsmechanismus (10c), der betriebswirksam mit dem Betätigungsschieber (10b) verbunden ist;
- Durchflussregelungsmittel, die mit ineinandergreifend mit dem ersten kinematischen Betätigungsmechanismus (10c) verbunden sind, wobei die Durchflussregelungsmittel ein Ventilelement (11) umfassen, das ausgelegt ist, um einen Druck und/oder eine Durchflussmenge zu regeln;
- einen zweiten kinematischen Betätigungsmechanismus (10d), der betriebswirksam mit dem Betätigungsschieber (10b) verbunden ist;
- Mittel zum Einstellen der Antriebsanordnung (2), die ineinandergreifend mit dem zweiten kinematischen Betätigungsmechanismus (10d) verbunden sind, wobei die Mittel zum Einstellen der Antriebsanordnung (2) ein Element umfassen, das ausgelegt ist, um eine Drehzahl der Antriebsanordnung (2) zu regeln, wobei die Mittel zum Einstellen der Antriebsanordnung (2) in funktioneller Koordination mit und im Wesentlichen in direkter struktureller Abhängigkeit der Durchflussregelungsmittel sind.

2. Vorrichtung nach Anspruch 1, wobei zudem eine zusätzliche Steuervorrichtung (12) bereitgestellt ist, die ausgelegt ist, um mindestens einen Mindestdurchflussmengenzustand des Stroms zu regeln,
wobei die zusätzliche Steuervorrichtung (12) betriebswirksam mit dem ersten kinematischen Betätigungselement (10c) allein verbunden ist und vorzugsweise ein Einstellelement aufweist, das aus einer Scheibe oder einem Rad besteht, ausgelegt, um eine Vielzahl an Konfigurationen der Durchflussregelungsmittel zu bestimmen.

## Revendications

1. Dispositif de soufflante/atomiseur, de préférence du type portable, comprenant :
- un ensemble à propulsion ou bloc d'alimentation (2) adapté pour générer une puissance mécanique ;
- un ensemble de soufflage (3) relié au dit ensemble à propulsion (2) et adapté pour stimuler et acheminer un flux d'air ;
- un distributeur orientable flexible (4) définissant un axe médian (4a) et adapté pour émettre et orienter un flux mis en mouvement par l'ensemble de soufflage (3) le long dudit axe médian (4a) ; et
- un ensemble de réglage (5) agissant fonctionnellement dans ledit distributeur orientable (4) pour introduire de façon sélective une quantité prédéterminée de substance « S » à distribuer/atomiser dans ledit flux, ledit dispositif comprenant de plus des moyens d'actionnement synchronisés (10) agissant simultanément sur le distributeur orientable (4) de manière à varier un débit dans ledit distributeur orientable (4) résultant de la quantité d'air ou de substance à introduire et à mélanger dans le flux d'air généré par ledit ensemble de soufflage (3) et l'ensemble à propulsion (2) de manière à varier la distribution de puissance mécanique ;
dans lequel lesdits moyens d'actionnement synchronisés (10) comprennent un corps de poignée ou poignée (10a) pouvant être saisie par un utilisateur/opérateur, ladite poignée (10a) étant reliée au distributeur orientable (4), **caractérisé en ce qu'**il inclut :
- au moins un coulisseau d'actionnement (10b) mobile entre une condition de fonctionnement minimum et une condition d'utilisation maximum ;
- un premier mécanisme d'actionnement cinématique (10c) fonctionnellement relié au dit coulisseau d'actionnement (10b) ;
- des moyens de réglage de flux accouplés au dit premier mécanisme d'actionnement cinématique (10c), lesdits moyens de réglage de flux incluant un élément de vanne (11) adapté pour régler une pression et/ou un débit ;
- un second mécanisme d'actionnement cinématique (10d) fonctionnellement relié au dit coulisseau d'actionnement (10b) ;
- des moyens de réglage de l'ensemble à propulsion (2) accouplés au dit second mécanisme d'actionnement cinématique (10d), lesdits moyens de réglage de l'ensemble à propulsion (2) comprenant un élément adapté pour régler une vitesse de rotation de l'ensemble à propulsion (2), lesdits moyens de réglage de l'ensemble à propulsion (2) étant en coordination fonctionnelle et en indépendance structurelle substantiellement directe avec lesdits moyens de réglage de débit.

2. Dispositif selon la revendication 1, dans lequel se trouve aussi un dispositif de commande (12) supplémentaire adapté pour régler au moins une condition de débit minimum du flux, ledit dispositif de commande (12) supplémentaire étant fonctionnellement relié uniquement au premier élément d'actionnement cinématique (10c) et comprenant de préférence un élément de réglage consistant en un disque ou une roue adapté(e) pour déterminer une pluralité de configurations des moyens de réglage du débit.
